# FASCICULE DE BREVET EUROPEEN

(11) **EP 0 712 714 B1**
(45) Date de publication et mention de la délivrance du brevet: **19.04.2000**
(21) Numéro de dépôt: 95402603.5
(22) Date de dépôt: 20.11.1995
(51) Int. Cl.: B29C 55/14

(54) **Procédé de préparation d'un film ultramince thermorétractable bi-orienté et film ultramince notamment obtenu par ledit procédé**
Wärmeschrumpfbare, biaxial orientierte, ultradünne Folie und Verfahren zu ihrer Herstellung
Thermally shrinkable biaxially oriented ultra thin film and method for its manufacture

(30) Priorité: 21.11.1994 FR 9413894
(43) Date de publication de la demande: 22.05.1996
(73) Titulaire: BOLLORE TECHNOLOGIES, F-29000 Quimper (FR)
(72) Inventeur: Glez, Jean-François, F-29000 Quimper (FR); Metaix, Jean-Marc, F-29000 Quimper (FR); Deleplanque, Philippe, F-29000 Quimper (FR)
(74) Mandataire: Warcoin, Jacques

(56) Documents cités:
- EP-A- 0 315 238
- EP-A- 0 319 401
- EP-A- 0 405 916
- EP-A- 0 410 792
- US-A- 4 277 594

## Description

La présente invention concerne un film monocouche ultramince thermorétractable bi-orienté à base de polyéthylène basse densité linéaire, ledit film présentant dans au moins une direction un pourcentage moyen de retrait à 120°C (en %) supérieur à 20 %. Elle concerne également un procédé de préparation d'un tel film et l'utilisation dudit film monocouche à titre de couche de coeur d'un film multicouche.

Les films thermorétractables à base de polyoléfine sont utilisés à grande échelle pour emballer de nombreux produits de consommation qui peuvent être soit rigides comme les livres, les disques compacts, les cassettes vidéo, les aliments tels que les agrumes, les boîtes de chocolat ou de bonbons, ou des objets souples comme les enveloppes.

Par l'expression "thermorétractable", on entend la possibilité pour lesdits films de subir un retrait plus ou moins prononcé dans une ou plusieurs directions sous l'action de la chaleur en général entre 90 et 120°C.

La thermorétractabilité résulte du fait que ledit film a été soumis à un ou plusieurs étirages de manière à "orienter", selon la direction du ou des étirages, les chaînes de polymères constitutives du film.

Les principales caractéristiques de ces films thermorétractables sont appréciées par la mesure :
- du retrait en fonction de la température,
- de la résistance et de l'allongement à la rupture,
- de la force de retrait,
- de la résistance à la propagation de la déchirure quand la déchirure est amorcée,
- de la soudabilité
- des caractéristiques optiques et en particulier la brillance et la transparence,
- des coefficients de frottement statique et dynamique.

Bien entendu, ces films doivent satisfaire aux exigences de plus en plus sévères des pays développés en ce qui concerne le respect de l'environnement.

On sait que c'est la cause principale des réticences actuelles vis-à-vis des films à base de chlorure de polyvinyle (PVC) du fait des gaz nocifs qu'ils dégagent lors de la mise en oeuvre, de l'utilisation et lors de l'incinération.

Selon l'usage auquel ils sont destinés, ces films thermorétractables doivent présenter des caractéristiques de retrait (pourcentage de retrait, force de retrait), qui peuvent considérablement varier.

Dans de nombreux cas, le retrait doit être équilibré dans toutes les directions (dans le cas, par exemple, des formes circulaires ou carrées afin d'éviter la formation de zones mal rétractées).

Pour d'autres applications, il est souhaitable que :
- le retrait global soit "déséquilibré", c'est-à-dire que le retrait dans une direction soit nettement différent de celui de l'autre direction.
- les forces de retrait soient déséquilibrées, c'est-à-dire que la force de retrait dans une direction soit nettement différente de celle de l'autre direction.

Afin de réduire le poids des emballages, pour des raisons d'économie, ce qui entraîne par la même occasion un meilleur respect de l'environnement, il serait souhaitable de pouvoir disposer de films de très faible épaisseur (inférieure à 11 µm) encore désignés ultraminces.

La société BOLLORE TECHNOLOGIES a proposé, il y a quelques années, un film d'emballage à base de polypropylène (copolymère polypropylène éthylène à faible taux d'éthylène) dont l'épaisseur était de 11 µm.

Toutefois, ces films de polypropylène qui présentent une bonne thermorétractabilité ne possèdent pas une résistance à la déchirure suffisamment élevée dans la plupart des cas et sont donc fragiles.

Aussi, leur préfère-t-on les films à base de polyéthylène basse densité linéaire.

Ces films de polyéthylène basse densité linéaire sont bien connus dans l'art et ont notamment été décrits dans la revue Plastics Words, Février 1981, page 45-50. Ils sont entre autres réalisés à partir de polyéthylène commercialisés sous la marque Dowlex 2035 ou 2045®.

Afin de leur conférer la propriété de thermorétractabilité, ces films subissent une bi-orientation. La bi-orientation de ces films est effectuée selon le procédé industriel en gonflant les films extrudés sous forme tubulaire avec de l'air pour former une bulle. Selon cette technique, on produit un film qui est orienté simultanément dans le sens transversal et dans le sens longitudinal.

Un film fabriqué selon ce procédé est décrit dans le brevet US 4,354,997 .

Un autre film fabriqué par ce procédé est décrit dans le brevet français 2 504 537 qui concerne une pellicule rétractable à base de copolymère d'éthylène avec une alpha-oléfine en C₈-C₁₈ présentant une densité comprise entre 0,9 et 0,94 et deux régions distinctes de fusion des cristallites au-dessous de 128°C.

Le mode de fabrication envisagé est du type "double bulle" connu en soi, qui consiste à extruder la matière à travers une filière en lui donnant une forme tubulaire, la refroidir dans un premier temps puis la réchauffer jusqu'à la température appropriée en l'étirant dans la direction longitudinale en même temps qu'on augmente les dimensions transversales de la gaine par la présence d'un volume d'air captif.

Le brevet européen 240 705 décrit également de tels films obtenus par un procédé similaire où un film tubulaire non-étiré est expansé et allongé au moyen d'une pression d'air dans le tube.

On a néanmoins décrit dans le brevet US 5 298 202 un film multicouche ultramince à base d'une couche de coeur de polyéthylène linéaire de très basse densité et de deux couches de peau en EVA. A l'avis du déposant, il n'est pas possible de réaliser un tel film en condition industrielle avec un film monocouche de polyéthylène (très) basse densité linéaire.

De façon générale, ce procédé bien que conduisant à des films équilibrés ne permet pas d'obtenir des films monocouche de faible épaisseur ( inférieure à 13 µm). Par ailleurs, ce procédé, compte tenu du point de fusion des polymères qui est très proche de la température d'orientation, conduit à des irrégularités d'épaisseur et en conséquence de caractéristiques. En d'autres termes, la conduite de ce procédé est difficile.

Il existe un second procédé de bi-orientation dit "à plat". On extrude à travers une filière plate un film que l'on refroidit à une température de trempe puis on l'étire au cours de deux étapes successives dans deux directions perpendiculaires.

Un procédé particulièrement intéressant de fabrication d'une pellicule thermoplastique rétractable à la chaleur à partir d'un copolymère d'éthylène à faible densité, par bi-orientation à plat, a été décrit dans le brevet européen 319 401.

Un tel procédé consiste à étirer le copolymère dans le sens marche à au moins trois fois la dimension initiale de la pellicule non étirée, à le chauffer à une deuxième température, supérieure à la première mais inférieure à sa température de fusion, en l'étirant dans le sens travers, à l'aide de pinces, à au moins cinq fois sa dimension initiale, enfin à refroidir la pellicule obtenue à température ambiante.

Particulièrement il est décrit dans EP-A-0 319 401 un procédé de préparation d'un film ultramince thermorétractable biorienté à base d'un ou plusieurs polyéthylène basse densité linéaire par le procédé à plat, comprenant les étapes suivantes :
- on chauffe au-delà de la température de fusion et l'on extrude un ou plusieurs copolymères d'éthylène et d'un comonomère d'alpha-oléfine en C₄ à C₈ de densité comprise entre 0,9 et 0,94 seuls ou éventuellement en mélange avec un ou plusieurs polymères oléfiniques,
- on coule et refroidit à la température de trempe appropriée, le film extrudé,
- on étire une première fois dans le sens machine ledit film à la température appropriée au moins 3 fois la dimension initiale du film non étiré,
- on étire une deuxième fois dans le sens travers ledit film au moins 5 fois la dimension initiale du film non étiré à la température appropriée, et
- on refroidit le film biorienté obtenu à la température ambiante.

Ce procédé d'étirage à plat présente de nombreux avantages, notamment un meilleur contrôle de la température, une épaisseur plus fine. Les exemples de ce brevet mentionnent une épaisseur nettement plus élevée sur les bords qu'au milieu.

Un procédé similaire est décrit dans le brevet européen 405 916. Dans les exemples de ce brevet, les films présentent une épaisseur comprise entre 17 et 30 µm.

Ce procédé de bi-orientation à plat ne permet pas d'obtenir un film aux caractéristiques équilibrées dans les deux sens.

En outre, en l'état actuel, les procédés "à plat" ou "double bulle" ne permettent pas de faire varier à volonté les caractéristiques mécaniques, les forces de retrait et les pourcentages de retrait dans chacune des deux directions.

Par ailleurs, ils ne permettent pas d'obtenir des films monocouches très minces à base de polyéthylène à basse densité linéaire d'épaisseur homogène tout en conservant des propriétés mécaniques et de retrait suffisantes.

En conséquence, un des objets de la présente invention est de fournir un procédé de préparation de films thermorétractables par bi-orientation à plat permettant une meilleure maîtrise des forces et pourcentages de retrait, de la résistance à la rupture et de la résistance à la déchirure.

Un autre objet de la présente invention est de proposer des films monocouches ultraminces, d'épaisseur homogène, présentant d'excellentes propriétés mécaniques, un excellent compromis optique - glissant, une plage de soudure élargie, ainsi que subséquemment, des films multicouches comportant à titre de couches de coeur de tel films ultraminces.

Par l'expression « épaisseur homogène », on entend que celle-ci , pour une surface de 1 m², ne variera pas plus que 10 %, de préférence 6 % par la méthode des pesées.

Le procédé de préparation comprend les étapes suivantes
- on chauffe au-delà de la température de fusion et l'on extrude un ou plusieurs copolymères d'éthylène et d'un comonomère d'alpha-oléfine en C₄ à C₁₈ de densité comprise entre 0,89 et 0,94 seul ou éventuellement en mélange avec un ou plusieurs polymères oléfiniques,
- on coule et refroidit à la température de trempe appropriée, le film extrudé,
- on étire une première fois dans le sens machine ledit film à la température appropriée entre 3 et 7 fois la dimension initiale du film non étiré,
- on étire une deuxième fois dans le sens travers ledit film entre 3 et 15 fois, de préférence 5 à 12 fois, la dimension initiale du film non étiré à la température appropriée,
- on étire une troisième fois dans le sens machine le film biorienté à la température appropriée entre 1,01 et 3 fois la dimension après le premier étirage,
- on refroidit le film biorienté obtenu à la température ambiante.

Après le troisième étirage, on emploiera également pour désigner ce film l'expression "surétiré".

Pour ce qui concerne certaines modalités pratiques de réalisation du procédé de bi-orientation, l'homme de métier pourra utilement se référer au brevet européen 319 401 qui concerne un procédé faisant intervenir une étape de bi-étirage à plat.

Par l'expression "polyéthylène basse densité linéaire", (en abrégé PEbdl) on entend les polymères formés à partir de la polymérisation d'éthylène avec une quantité en général 0,5 à 20%, de préférence 1 à 10% d'une alpha-oléfine comportant 4 à 18 atomes de carbone et notamment 4 à 8 atomes de carbone. Ces polymères comprennent également les polyéthylènes de très basse densité (en anglais "VLDPE") ou les plastomères.

Les polyéthylènes basse densité linéaire ont une densité comprise entre 0,915 et 0,94 g/cm³. Les PEbdl sont préférés dans le cadre de la présente invention.

Parmi les exemples d'alpha-oléfine convenant dans le cadre de la présente invention on peut citer notamment le 1-butène, 1-pentène, 1-hexène, 1-heptène, 1-octène, 4-méthylpentène-1, 1-décène, 1-undécéne et 1-dodécène.

La réaction de copolymérisation de ces comonomères peut être effectuée à basse ou moyenne pression en utilisant un catalyseur Ziegler-Natta ou par le procédé de catalyse métallocène ("un seul site").

La densité du copolymère est comprise entre 0,89 et 0,94, soit une masse volumique de 0.89 à 0.94 g/cm3 et mesurée à 25°C selon ASTM.

Le copolymère présente un indice de fluidité à l'état fondu compris entre 0,2 et 3 g/10 mn, selon ASTM.

Le procédé faisant intervenir un bi-étirage à plat est préféré à cause de la difficulté de réaliser des films ultra minces par un procédé à bulles.

Les demandeurs ont découvert de façon inattendue qu'un troisième étirage dans le sens machine permettait d'améliorer considérablement le procédé de fabrication dans la mesure où les caractéristiques mécaniques pouvaient être mieux contrôlées et/ou cela pouvait conduire à l'obtention de film ultra minces. Pour un même taux d'étirage résultant, il est apparu qu'une séquence d'étirage : étirage long, étirage travers, étirage long n'est pas équivalente à la séquence classique en deux étapes long et travers.

Le taux de surétirage est dépendant de la température à laquelle le surétirage est effectué. Il devra être d'autant plus élevé que la température sera basse.

De façon générale, il est possible à proximité de la température de fusion (jusqu'à 30°C en dessous) d'avoir un taux d'étirage aussi faible que 1,01.

Pour équilibrer le film, il est néanmoins souhaitable d'effectuer un surétirage d'au moins 1,05, avantageusement entre 1,1 et 1,5.

Selon une variante avantageuse, le troisième étirage est compris entre 1,01 et 2,5 fois la dimension initiale après le premier étirage, de préférence entre environ 1,05 et 2 fois par rapport à la dimension obtenue après le premier étirage.

De façon connue, les polymères lors de la fabrication sont associés à de faibles quantités d'agents de glissement et d'agents anti-blocage.

Parmi les agents anti-blocage, on peut citer la silice, parmi les agents de glissement, on peut citer la stéaramide ou l'érucamide ou l'oléamide.

Typiquement, ces additifs seront présents dans une proportion en poids n'excédant pas 10 000 ppm du mélange total, en général de 1000 à 5000 ppm.

Par polymère oléfinique pouvant être associé aux polyéthylènes basse densité linéaire, on entend les polymères qui améliorent les propriétés du film résultant (meilleure soudabilité, meilleure transparence, perméabilité, possibilité de réticulation, caractéristiques mécaniques etc.)

Lorsque le copolymère est en mélange, il peut être associé avantageusement avec un polyéthylène radicalaire basse densité bien connu de l'homme de métier ou un copolymère éthylène/acétate de vinyle (en abrégé "EVA") ou un polyéthylène haute densité ou un copolymère éthylène/propylène.

En général, la proportion de polymère associé présent dans le mélange n'est pas supérieure à 40% par rapport au mélange total en poids.

Parmi les autres caractéristiques permettant de mettre en oeuvre le procédé de préparation selon la présente invention, on pourra citer les caractéristiques suivantes.

Le polymère ou le mélange de polymère est extrudé à une température comprise entre 180 et 250 °C.

La température de trempe est généralement comprise entre 10 et 80 °C.

Le film extrudé est ensuite rechauffé avant étirage sens machine à une température comprise entre 70 et 130 °C.

Après l'étirage sens machine, le film est chauffé à une température généralement comprise entre 110 et 140 °C, puis étiré dans le sens travers au taux d'étirage indiqué précédemment.

Le film est éventuellement refroidi à une température d'étirage sens machine comprise entre 40 et 70°C et surétiré. Compte tenu du fait comme cela a déjà été indiqué, que la température de surétirage peut être élevée, il n'est dans ce cas pas nécessaire de refroidir le film avant d'effectuer le surétirage. Il faudra veiller pour ce troisième étirage à ne pas effectuer celui-ci à une température telle qu'une partie trop importante de l'orientation transversale précédente serait perdue. Ce troisième étirage peut également être effectué ultérieurement. La température de ce troisième étirage est comprise entre 20 et 130°C.

La pellicule est ensuite refroidie à la température ambiante puis récupérée.

La vitesse de défilement est généralement comprise entre 20 et 200 m/mn. Ce procédé permet même d'atteindre des vitesses de défilement de l'ordre de 250 m/mn.

L'invention concerne également un film monocouche ultramince thermorétractable d'épaisseur homogène, à base de polyéthylène basse densité linéaire, susceptible d'être obtenu par le procédé tel que décrit précédemment, caractérisé en ce qu'il présente dans au moins une direction, de préférence dans les deux directions un pourcentage de retrait à 120°C (en %) supérieur à 20 %, de préférence dans au moins une direction, supérieur à 30 %, avantageusement à 40 % en ce qu'il présente une épaisseur comprise entre 5 et 11 µm et en ce que l'épaisseur ne varie pas de plus de 10 % pour une surface de 1 m².

Avantageusement, ce film présente un retrait surfacique d'au moins 75 % de préférence 80-85 %. Par pourcentage de retrait surfacique, on entend la perte de surface d'un carré après rétractation.

Outre le fait que ces films permettent de réduire le poids total des emballages du fait de leur faible épaisseur, les films minces selon la présente invention se rétractent plus vite et en conséquence sont plus adaptés à l'augmentation des cadences des machines à rétracter (la vitesse de soudure avec ces films est également plus élevée).

Ces films présentent une force de retrait tout à fait équivalente à celle des films minces d'épaisseur plus élevée. C'est à dire une force de retrait supérieure dans au moins une direction à 200 N/cm² à 106°C.

Le film monocouche ultramince présente en outre avantageusement les caractéristiques suivantes prises seules ou en combinaison :
- Le film présente une résistance à la déchirure amorcée de 2mm supérieure ou égale à 4N dans au moins une direction avec un allongement à la déchirure amorcée de 2 mm supérieur ou égal à 10 % dans au moins une direction.
- Le film présente une résistance à la traction d'au moins 6 DaN/mm² dans au moins une direction et un allongement à la traction supérieur à 75 % dans au moins une direction.
- Le film présente une résistance à la soudure supérieure ou égale à 0,8 N/µ dans un intervalle de température aussi large que 177°C-260°C.

Par ailleurs, selon une variante plus avantageuse, le rapport de pourcentage de retrait sens machine/sens travers à 120°C est égal ou supérieur à 1 et avantageusement le rapport des forces de retrait sens machine/sens travers est supérieur ou égal à 1 à 106°C.

Dans ce cas, les films selon l'invention présentent un retrait déséquilibré et sont particulièrement appropriés pour des applications où de plus fortes caractéristiques de retrait dans un sens par rapport à l'autre sont souhaitables.

Dans le cas par exemple des machines à conformateurs et plus particulièrement des objets épais (dictionnaire), il est nécessaire d'avoir un retrait plus fort sens machine.

Dans le cas de l'emballage d'objets de forme allongée, il est préférable d'utiliser un film à retrait plus fort sens travers (pain, tringles à rideaux, skis).

De même pour l'emballage de produits plats et souples dans une seule direction (magazines, blocs notes ....), il est intéressant d'utiliser un film à force de retrait plus faible dans un sens que dans l'autre.

Selon une autre variante avantageuse, l'épaisseur du film est comprise entre 6 et 10 µm.

Les compositions chimiques du film sont similaires à celles qui ont été indiquées dans le cadre du procédé de préparation.

L'invention concerne également l'utilisation d'un film ultramince monocouche thermorétractable bi-orienté d'épaisseur homogène à base de polyéthylène basse densité linéaire à titre de couche de coeur d'un film multicouche thermorétractable comprenant une couche de coeur et deux couches externes ou intermédiaires appliquées sur les faces de la couche de coeur, caractérisé en ce que la couche de coeur est formée d'un film mince thermorétractable tel que décrit ci-dessus.

Ces films multicouches sont bien connus et sont notamment décrits dans le brevet français 2 521 907 ou le brevet américain 4 194 039.

Généralement, le film multicouche sera formé par coextrusion d'une structure sandwich tricouche, notamment selon les proportions suivantes en poids : - première couche externe : 5 à 35%,
- couche de coeur : 30 à 90 %,
- deuxième couche externe : 5 à 35%.

Les couches intermédiaires ou externes sont formées avantageusement soit de polyéthylène basse densité linéaire, soit d'un copolymère propylène-éthylène, contenant une faible proportion d'éthylène comme ceci est décrit notamment dans le brevet US 4 194 039, soit d'un PEBD, soit d'une résine du type EVA. Toutes ces couches peuvent être formées d'un mélange de la même famille ou de famille différente.

Les exemples suivants illustrent l'invention sans toutefois la limiter.

### Exemple 1

On réalise un film ultramince en utilisant une formulation contenant un mélange de polymère comportant 60% de polyéthylène basse densité linéaire contenant 7,5 % de 1-octène, de température de fusion d'environ 126°C, de densité 0,924, et d'indice de fluidité à l'état fondu égal à 1; 40 % de polyéthylène basse densité radicalaire de température de fusion égal à 116°C, de densité égale à 0,927 et d'indice de fluidité égal à 0,27 ; 2500 ppm d'oléamide ; 2000 ppm de silice naturelle.

On chauffe le polymère à une température de 230°C et on l'extrude à travers une filière plate de 880 mm de large.

La matière est recueillie sur un tambour de coulée dont la température de trempe est maintenue par refroidissement interne à 30°C.

La pellicule formée est ensuite reprise par des rouleaux chauffés pour y subir un préchauffage jusqu'à 88°C, puis elle est étirée dans le sens machine par passage entre des rouleaux de petit diamètre dont le rapport des vitesses avec ceux de préchauffage détermine l'étirement. Il est dans le cas présent de 5/1.

A cette étape du procédé la pellicule étirée longitudinalement est stabilisée thermiquement au moyen de rouleaux maintenus à une température supérieure à 70°C.

A la sortie de ces rouleaux, le film est guidé au moyen de pinces entre deux rails disposés dans un même plan horizontal. Les pinces sont entraînées en continu le long des rails par des chaînes formant une boucle. Elles se présentent en position déployée à l'amont où leurs mâchoires se referment sur les bords de la pellicule. Les rails s'écartent progressivement de l'amont vers l'aval selon une géométrie étudiée pour obtenir un étirement transversal de rapport 11/1.

Cet étirage a lieu dans un four, à air chaud, qui comporte plusieurs zones de chauffe que l'on peut régler indépendamment les unes des autres.

D'autres informations sur les modalités de mise en oeuvre de ce procédé sont indiquées dans le brevet européen précité n° 319 401.

Le troisième étirage ou surétirage est effectué de la façon suivante :

Le film est étiré à nouveau dans le sens machine par passage entre deux rouleaux dont le rapport des vitesses est fixé. Il est dans l'exemple présent de 1,1. La température de ces rouleaux est fixée à 40°C.

Le film après le surétirage est entraîné par d'autres rouleaux sur une distance lui permettant de revenir à la température ambiante.

Son refroidissement peut être éventuellement accéléré au moyen d'une douche à air.

A la sortie de cette zone de surétirage, la pellicule est enfin enroulée sur bobine.

Les caractéristiques du procédé de cet exemple ainsi que des exemples 2, 3 et 4 sont réunies dans le tableau I ci-après.

Le film obtenu présente les caractéristiques indiquées au tableau II ci-après.

### Exemple 2

On a réalisé un autre film ultramince avec la même formulation que celle indiquée à l'exemple 1 en modifiant toutefois certaines conditions de mise en oeuvre du procédé, en particulier le taux de surétirage a été porté à 1,7.

Les caractéristiques du film obtenu sont réunies dans le tableau II ci-après.

### Exemple 3

On a réalisé un autre film ultramince avec la même formulation que celle indiquée à l'exemple 1 en modifiant toutefois certaines conditions de mise en oeuvre du procédé (cf tableau I ci-dessous) en particulier le taux de surétirage a été porté à 2,0.

Les caractéristiques du film obtenu sont réunies dans le tableau II ci-après.

### Exemple 4

On a réalisé un autre film ultramince avec la même formulation que celle indiquée à l'exemple 1 en modifiant toutefois certaines conditions de mise en oeuvre du procédé, en particulier le taux d'étirage a été porté à 1,8 et la température de surétirage à 110°C.

Les caractéristiques du film obtenu sont réunies dans le tableau II ci-après.

**TABLEAU I**

| | Ex.1 | Ex.2 | Ex.3 | Ex.4 |
|---|---|---|---|---|
| Temps d'extrusion (°C) | 230 | 230 | 230 | 230 |
| Trempe | 40 | 45 | 40 | 40 |
| Taux d'étirage sens long | 5 | 5 | 5 | 5 |
| Taux d'étirage sens travers | 11 | 11 | 11 | 11 |
| Surétirage sens long | 1,1 | 1,7 | 2 | 1,8 |
| T° étirage SL (°C) | 40 à 80 | 40 à 80 | 40 à 80 | 40 à 80 |
| T° étirage ST (°C) | 100 à 120 | 100 à 120 | 100 à 120 | 100 à 120 |
| T° surétirage SL (°C) | 48 | 45 | 52 | 110 |

### Exemples comparatifs 1 et 2 (films commerciaux)

On a mesuré les caractéristiques de deux films commerciaux répertoriés sous les références 1 et 2, utilisés pour le suremballage présentant d'excellentes caractéristiques.

Les caractéristiques des films obtenus sont indiquées au tableau II ci-après.

**TABLEAU II**

| Caractéristiques de films | | | | | | | | |
|---|---|---|---|---|---|---|---|---|
| Caractéristiques | | Norme | Réf. 1 | Réf. 2 | Ex. 1 | Ex. 2 | Ex. 3 | Ex. 4 |
| Epaisseur (µm) | | | 15,0 | 19,0 | 7,5 | 7,5 | 7,0 | 9,0 |
| | SL | méthode interne bain d'huile - Ech. 10 cm x 10 cm 30 sec. | 48 | 60 | 45 | 60 | 66 | 67 |
| Retrait (%) à 120°C | | | | | | | | |
| | ST | | 53 | 62 | 71 | 62 | 59 | 57 |
| | SL | | 27 | 21 | 4 | 28 | 39 | 43 |
| Force de retrait à 106°C (kg/cm²) | | | | | | | | |
| | ST | | 38 | 30 | 48 | 20 | 10 | 15 |
| | SL | | 9,5 | 12,5 | 5 | 3 | 5 | 10 |
| Résistance (N) à la déchirure amorcée de 2 mm | | NF 54108 | | | | | | |
| | ST | | 8,6 | 12,1 | 10 | 4 | 2 | 6 |
| | SL | | 6 | 15 | 18 | 13 | 13,5 | 10,4 |
| Allongt (%) à la déchirure amorcée 2 de mm | | | | | | | | |
| | ST | | 7 | 16 | 4 | 17 | 14 | 10,6 |
| Trouble | | ASTM 1003 | 2,8 | 3,1 | 2,5 | 1,9 | 2,6 | 1,2 |
| Brillance (α-20°) | | ASTMD 523 | 120 | 115 | 118 | 120 | 118 | 125 |
| statique | | | 0,50 | 0,35 | 0,25 | 0,28 | 0,26 | 0,25 |
| Coefficient de frottement dynamique | | | 0,35 | 0,18 | 0,17 | 0,18 | 0,16 | 0,18 |
| | SL | | 13,4 | 8,9 | 7,2 | 10,1 | 11,9 | 15,3 |
| Résistance à la traction (DaN/mm²) | | ASTMD 882 | | | | | | |
| | ST | | 13,8 | 10 | 18,6 | 12,9 | 13,1 | 14,3 |
| | SL | | 100 | 133 | 193 | 124 | 82 | 67 |
| Allongement à la traction (%) | | | | | | | | |
| | ST | | 96 | 145 | 21 | 52 | 71 | 73 |
| Résistance à la soudabilité | (N) | méthode interne | 9,3 | 21,3 | 7,8 | 7,9 | 7,8 | ---- |
| | | T = 177°C | | | | | | |
| | | t = 1 sec | | | | | | |
| | (N/µ) | P = 1,5 bars | 0,6 | 1,1 | 0,8 | 1,1 | 1,1 | ---- |
| | (N) | T = 260°C | 20,6 | 6,9 | 7,7 | 9,4 | 9,6 | ---- |
| | | t = 0,25 sec | | | | | | |
| | (N/µ) | P = 1,5 bars | 1,3 | 0,4 | 0,8 | 1,3 | 1,4 | ---- |

Le graphique présenté ci-après sur la figure annexée à la description positionne parfaitement les exemples par rapport aux produits commerciaux références 1 et 2.

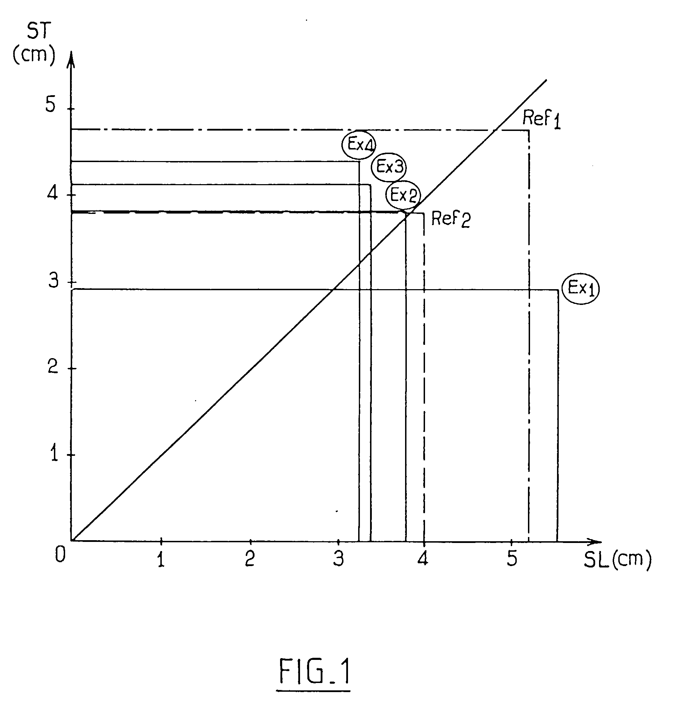

La figure 1 est un diagramme des retraits sens travers - sens machine (en cm) à 120°C pour des surfaces carrées 10 cm x 10 cm (dimensions avant rétraction) pour les différents films.

La droite de pente 1 représente les caractéristiques d'un film équilibré.

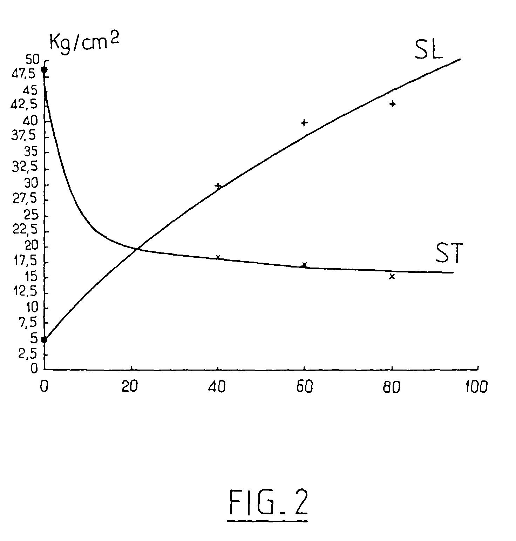

La figure 2 représente l'influence du taux de surétirage sur les forces de retrait mesurées à 106°C sens long et sens travers.

## Revendications

1. Film ultramince monocouche thermorétractable biorienté à base de polyéthylène basse densité linéaire, ledit film présentant dans au moins une direction un pourcentage moyen de retrait à 120 °C (en %) supérieur à 20%, a une épaisseur comprise entre 6 et 11 micromètres, caractérisé en ce que l'épaisseur est homogène c'est-à-dire qu'elle ne varie pas de plus de 10 % pour une surface de 1 m².

2. Film ultramince monocouche thermorétractable selon la revendication 1, caractérisé en ce que l'épaisseur ne varie pas de plus de 6% pour une surface de 1 m².

3. Film ultramince monocouche thermorétractable selon la revendication 1 ou 2, caractérisé en ce que l'épaisseur est comprise entre 6 et 10 µm.

4. Film ultramince monocouche thermorétractable selon l'une des revendications 1 à 3, caractérisé en ce que le rapport de pourcentage de retrait à 120°C sens machine/sens travers est supérieur ou égal à 1.

5. Film ultramince monocouche thermorétractable selon la revendication 4, caractérisé en ce que le rapport des forces de retrait à 106°C est supérieur ou égal à 1.

6. Film ultramince monocouche thermorétractable selon l'une des revendications 1 à 5, caractérisé en ce que le polyéthylène basse densité linéaire est un copolymère d'éthylène avec une quantité inférieure à 10% en poids d'une alpha-oléfine de C₄ à C₁₈, et a une densité comprise entre 0,915 et 0,94.

7. Film ultramince monocouche thermorétractable selon l'une des revendications 1 à 6, caractérisé en ce qu'il comprend en poids un mélange de:
- 60 à 100 % de polyéthylène basse densité linéaire,
- 0 à 40 % d'un polymère choisi parmi le polyéthylène basse densité radicalaire, le copolymère éthylène acétate de vinyle, le polyéthylène haute densité et une quantité appropriée d'agents antiblocage et anti-glissement.

8. Utilisation d'un film ultramince monocouche thermorétractable biorienté d'épaisseur homogène à base de polyéthylène basse densité linéaire à titre de couche de coeur d'un film multicouche thermorétractable comprenant une couche de coeur et deux couches externes ou intermédiaires appliquées sur chaque surface de la couche de coeur, caractérisé en ce que la couche de coeur est formée d'un film ultramince selon l'une des revendications 1 à 7 et les couches intermédiaires ou de peau sont à base de copolymère propylène éthylène à faible teneur élevée en éthylène, de polyéthylène basse densité linéaire, une résine de type EVA, un PEBD.

9. Procédé de préparation d'un film ultramince thermorétractable biorienté selon l'une des revendications 1 à 7, à base d'un ou plusieurs polyéthylène basse densité linéaire par le procédé à plat, comprenant les étapes suivantes :
- on chauffe au-delà de la température de fusion et l'on extrude un ou plusieurs copolymères d'éthylène et d'un comonomère d'alpha-oléfine en C₄ à C₁₈ de densité comprise entre 0,89 et 0,94 seuls ou éventuellement en mélange avec un ou plusieurs polymères oléfiniques ,
- on coule et refroidit à la température de trempe appropriée, le film extrudé,
- on étire une première fois dans le sens machine ledit film à la température appropriée entre 3 et 7 fois la dimension initiale du film non étiré,
- on étire une deuxième fois dans le sens travers ledit film entre 3 et 15 fois la dimension initiale du film non étiré à la température appropriée,
- on étire une troisième fois dans le sens machine le film biorienté à la température appropriée entre 1,01 et 3 fois la dimension après le premier étirage,
- on refroidit le film biorienté obtenu à la température ambiante.

10. Procédé de préparation d'un film ultramince selon la revendication 9, caractérisé en ce que le troisième étirage est compris entre 1,05 et 2,5 fois la dimension après le premier étirage.

11. Procédé de préparation d'un film ultramince selon la revendication 10, caractérisé en ce que le troisième étirage est compris entre 1,7 et 2,5 fois la dimension après le premier étirage.

12. Procédé de préparation d'un film ultramince selon la revendication 11, caractérisé en ce que le troisième étirage est compris entre 1,7 et 2 fois la dimension après le premier étirage.

## Patentansprüche

1. Ultradünner, einlagiger, wärmeschrumpfbarer, biaxial ausgerichteter Film auf der Basis von linearem Polyethylen niedriger Dichte, wobei der Film in wenigstens einer Richtung bei 120°C einen mittleren Schrumpfprozentsatz (in %) von mehr als 20% und eine Dicke zwischen 6 und 11 Mikrometern aufweist, dadurch gekennzeichnet, daß die Dicke homogen ist, d.h., daß sie für eine Fläche von 1 m² nicht mehr als 10% variiert.

2. Ultradünner, einlagiger, wärmeschrumpfbarer Film gemäß Anspruch 1, dadurch gekennzeichnet, daß die Dicke für eine Fläche von 1 m² nicht mehr als 6% variiert.

3. Ultradünner, einlagiger, wärmeschrumpfbarer Film gemäß Anspruch 1 oder 2, dadurch gekennzeichnet, daß die Dicke zwischen 6 und 10 µm liegt.

4. Ultradünner, einlagiger, wärmeschrumpfbarer Film gemäß einem der Ansprüche 1 bis 3, dadurch gekennzeichnet, daß das Schrumpfprozentsatzverhältnis Maschinenrichtung/Querrichtung bei 120°C größer oder gleich 1 ist.

5. Ultradünner, einlagiger, wärmeschrumpfbarer Film gemäß Anspruch 4, dadurch gekennzeichnet, daß das Verhältnis der Schrumpfkräfte bei 106°C größer oder gleich 1 ist.

6. Ultradünner, einlagiger, wärmeschrumpfbarer Film gemäß einem der Ansprüche 1 bis 5, dadurch gekennzeichnet, daß das lineare Polyethylen niedriger Dichte ein Ethylen-Copolymer ist mit einer geringeren Menge als 10 Gew.-% eines Alpha-Olefins von C₄ bis C₁₈, und daß es eine Dichte zwischen 0,915 und 0,94 aufweist.

7. Ultradünner, einlagiger, wärmeschrumpfbarer Film gemäß einem der Ansprüche 1 bis 6, dadurch gekennzeichnet, daß er in Gewichtsprozent ein Gemisch aufweist aus;
- 60 bis 100 % linearem Polyethylen niedriger Dichte
- 0 bis 40 % eines Polymers, welches ausgewählt ist aus dem Polyethylenradikal mit niedriger Dichte, dem Vinylacetat-Ethylen-Copolymer, dem Polyethylen mit hoher Dichte und einer geeigneten Menge von Antiblockier- und Gleitschutzmitteln.

8. Verwendung eines ultradünnen, einlagigen, wärmeschrumpfbaren, biaxial ausgerichteten Filmes mit homogener Dicke auf der Basis von linearem Polyethylen niedriger Dichte als Kernschicht eines mehrlagigen, wärmeschrumpfbaren Filmes mit einer Kernschicht und zwei Außen- oder Zwischenschichten, welche auf jede Fläche der Kernschicht aufgelegt werden, dadurch gekennzeichnet, daß die Kernschicht von einem ultradünnen Film gemäß einem der Ansprüche 1 bis 7 gebildet ist, und die Zwischen- oder Hautschichten auf der Basis eines Propylen-Ethylen-Copolymers mit gering erhöhtem Gehalt an Ethylen, eines linearen Polyethylens niedriger Dichte, eines Harzes der Art EVA und eines LDPEs sind.

9. Verfahren zur Herstellung eines ultradünnen, wärmeschrumpfbaren, biaxial ausgerichteten Filmes gemäß einem der Ansprüche 1 bis 7 auf der Basis eines oder mehrerer linearer Polyethylene niedriger Dichte mit dem Flachverfahren, wobei es die folgenden Schritte umfäßt :
- ein oder mehrere Copolymere aus Ethylen und einem Comonomer mit Alpha-Olefin in C₄ bis C₁₈ mit einer Dichte zwischen 0,89 und 0,94 allein oder eventuell im Gemisch mit einem oder mehreren olefinischen Polymeren über die Schmelztemperatur hinaus zu erhitzen und zu extrudieren,
- den extrudierten Film abfließen zu lassen und auf die geeignete Ablöschtemperatur abzukühlen,
- den Film ein erstes Mal in der Maschinenrichtung bei einer geeigneten Temperatur auf 3 bis 7 mal der Anfangsabmessung des nicht-gestreckten Filmes zu strecken,
- den Film ein zweites Mal in Querrichtung bei einer geeigneten Temperatur auf 3 bis 15 mal der Anfangsabmessung des nicht-gestreckten Filmes zu strecken,
- den biaxial ausgerichteten Film ein drittes Mal in der Maschinenrichtung bei einer geeigneten Temperatur auf zwischen 1,01 und 3 mal der Abmessung nach dem ersten Strecken zu strecken,
- den erhaltenen, biaxial ausgerichteten Film auf Umgebungstemperatur abzukühlen.

10. Verfahren zur Herstellung eines ultradünnen Filmes gemäß Anspruch 9, dadurch gekennzeichnet, daß das dritte Strecken zwischen 1,05 und 2,5 mal der Abmessung nach dem ersten Strecken liegt.

11. Verfahren zur Herstellung eines ultradünnen Filmes gemäß Anspruch 10, dadurch gekennzeichnet, daß das dritte Strecken zwischen 1,7 und 2,5 mal der Abmessung nach dem ersten Strecken liegt.

12. Verfahren zur Herstellung eines ultradünnen Filmes gemäß Anspruch 11, dadurch gekennzeichnet, daß das dritte Strecken zwischen 1,7 und 2 mal der Abmessung nach dem ersten Strecken liegt.

## Claims

1. Biaxially oriented heat-shrinkable ultra-thin monolayer film made of linear low density polyethylene, the said film having an average shrinkage percentage at 120°C (in %) greater than 20% in at least one direction, a thickness of between 6 and 11 micrometers, and characterized in that the thickness is uniform, in other words it does not vary by more than 10% over an area of 1 m².

2. Heat-shrinkable ultra-thin monolayer film according to claim 1, characterized in that the thickness does not vary by more than 6% over an area of 1 m².

3. Heat-shrinkable ultra-thin monolayer film according to claim 1 or 2, characterized in that the thickness is between 6 and 10 µm.

4. Heat-shrinkable ultra-thin monolayer film according to one of claims 1 to 3, characterized in that the machine direction / transverse direction of the shrink percentage ratio at 120°C is equal to or greater than 1.

5. Heat-shrinkable ultra-thin monolayer film according to claim 4, characterized in that the ratio of the shrinkage forces at 106°C is greater than or equal to 1.

6. Heat-shrinkable ultra-thin monolayer film according to one of claims 1 to 5, characterized in that the linear low density polyethylene is an ethylene copolymer with a quantity of less than 10% by weight of a C₄ to C₁₈ alphaolefin, and its density is between 0.915 and 0.94.

7. Heat-shrinkable ultra-thin monolayer film according to one of claims 1 to 6, characterized in that it comprises a mix by weight of:
- 60 to 100% of linear low density polyethylene,
- 0 to 40% of a polymer chosen among radical-type low density polyethylene, ethylene vinyl acetate copolymer, high density polyethylene and an appropriate quantity of antiblock and anti-slip agents.

8. Use of a biaxially oriented heat-shrinkable ultra-thin monolayer film with a uniform thickness based on linear low density polyethylene as a core layer in a heat-shrinkable multilayer film comprising a core layer and two external or intermediate layers applied on each side of the core layer, characterized in that the core layer is formed of an ultra-thin film according to any one of claims 1 to 7 and the intermediate or surface layers are based on propylene ethylene copolymer with a low high content of ethylene, low density linear polyethylene, an EVA type resin, and an LDPE.

9. Process for preparation of a biaxially oriented heat-shrinkable ultra-thin film according to one of claims 1 to 7, made of one or several linear low density polyethylenes using the flat process comprising the following steps:
- one or several ethylene copolymers and a C₄ to C₁₈ alphaolefin comonomer with a density of between 0.89 and 0.94 are heated beyond the melting temperature and are extruded either alone or possibly mixed with one or several olefinic polymers.
- the extruded film is poured and cooled at the appropriate hardening temperature,
- the said film is drawn once in the machine direction at the appropriate temperature to between 3 to 7 times the initial dimension of the non stretched film,
- the said film is drawn a second time in the transverse direction at the appropriate temperature to between 3 and 15 times the initial dimension of the non stretched film,
- the biaxially oriented film is drawn a third time in the machine direction at an appropriate temperature to between 1.01 and 3 times the dimension after the first draw,
- the biaxially oriented film obtained is cooled at room temperature.

10. Process for preparation of an ultra-thin film according to claim 9, characterized in that the third draw is to between 1.05 and 2.5 times the dimension after the first draw.

11. Process for preparation of an ultra-thin film according to claim 10, characterized in that the third draw is to between 1.7 and 2.5 times the dimension after the first draw.

12. Process for preparation of an ultra-thin film according to claim 11, characterized in that the third draw is to between 1.7 and 2 times the dimension after the first draw.
